# EUROPEAN PATENT APPLICATION

(11) **EP 4 417 049 A1**
(43) Date of publication of application: **21.08.2024**
(21) Application number: 24157705.5
(22) Date of filing: 14.02.2024
(51) Int. Cl.: A01K 97/02

(54) **DEVICE FOR DISPENSING BAIT**

(30) Priority: 14.02.2023 GB 202302088
(71) Applicant: Wolf International Limited, Brentwood Essex CM13 3AB (GB)
(72) Inventor: Fox, Clifford Royston, Brentwood, CM13 3AB (GB); Tasker, Stephen, Brentwood, CM13 3AB (GB)
(74) Representative: Spencer, Michael David

(57) **Abstract**

A bait dispensing device (10, 110, 210) which can be filled with bait, and holds the bait secure when casting, dispersing the bait in a localised area upon contact with the water's surface, characterised in that it contains a container (11, 111, 211) comprising of three segments (14, 16, 18, 114, 116, 118, 214, 216, 218) adapted to house bait when the three segments (14, 16, 18, 114, 116, 118, 214, 216, 218) are closed together during casting and open upon contact with the water's surface into a 'crown-like' formation.

## Description

### Field of the Invention:

The present invention relates to a device used for the dispensing of bait within a localised area of water.

In detail, the invention relates to a bait dispensing device for use when fishing and is particularly suited to carp fishing.

### State of the Art:

Sport fishing and particularly carp fishing is a recreational activity which requires a specific technique to effectively catch the Common Carp (Cyprinus Carpio) and the other members of family Cyprinidae. Given that carp do not possess teeth, they consume their food through the suction effect of their mouth. Therefore, the astute angler would not place the bait on a hook as this would be an ineffective technique for catching carp. Instead, the correct technique is to dispense the bait within a specified area of a body of water to attract the carp whilst the hook is then used to catch the carp by its lower lip.

Due to the need for effective and localised dispensing of bait, numerous devices, technically termed bait dispensers have been invented. These are devices which are used to contain bait whilst the device is cast into water and then proceed to dispense the bait within the water. This is with the intention of attracting bottom and surface-feeding fish.

Carp-fishing requires that the bait dispenser only releases the bait in a specified area where the angler intends to place their hook. Therefore, it is crucial that the bait remains secure inside the bait dispenser when casting and the bait is only released upon contact with the water. Otherwise, the bait could be dispersed over a wide body of water which would dramatically reduce the effectiveness of the bait.

WO2015/087361 describes a bait dispenser which consists of a container which is adapted to house bait within it whilst the bait dispenser is cast with a line and then once the bait dispenser impacts the water, the container then opens, due to the resultant shock wave effect, and dispenses the bait. The container of this device is comprised of two half-shells which are symmetrical in shape and possess a mutual joining plane. The container has a fastening means by which the container is connected to the line. This fastening means consists of two flexible threadlike elements which are identical in length. One end of each of the flexible threadlike elements is connected to its respective half-shell and the opposite end is connected to the other flexible threadlike element which is in turn connected to the other respective half-shell by its opposite end. The flexible threadlike elements are then simultaneously connected to the line. The container has a reversible closing means which uses the force of magnetic attraction between the two half-shells.

WO2019/097558A1 describes a bait dispenser which consists of a container which is used to contain bait whilst the device is being cast. The container is subdivided into a plurality of at least four segments. This device allows the user to fill the container whilst a single segment is open. The device has a torpedo-like structure with a flat head at is distal end and a pointed proximal end. The device uses reversible closing means for its four segments which is generated by the magnetically attractive force of the magnets attached to each of the four segments which is then used to secure the four segments together when the container is closed. The four segments are adapted to remain connected through the magnetic attraction whilst the bait dispenser is being cast and then the four segments separate completely from one another when the bait dispenser is acted on by the shock wave effect of the water. Thus, the bait is released into the water.

### Statement of Invention:

Accordingly, a first aspect of the present invention is directed to a bait dispensing device which can be filled with bait, and holds the bait secure when casting, dispersing the bait in a localised area upon contact with the water's surface, comprising:
- a container comprising of three segments adapted to house bait when the three segments are closed together during casting and open upon contact with the water's surface into a 'crown-like' formation,
- a line attachment means to connect the container to a retrieval line,
- a cylindrical fastening means which houses each of the three segment's narrow flexible proximal tails at the end of their respective stabilising fins and allows the segments to open upon contact with the water's surface whilst remaining united with the device by way of their narrow flexible proximal tails being secured within the cylindrical fastening means,
- magnetic closing means for the container, whereby the magnetic force of attraction between the magnets attached to each segment secures the segments together along their interjoining edges,
- a movement limiting means to hold segments open upon contact comprising of a sliding truncated cone-shaped wedge on a central bar which is housed within the cylindrical fastening means and is surrounded by the three segments, the truncated cone-shaped wedge is positioned along the bar within the container portion of the three segments and is acted upon by a compressed helical spring which surrounds the bar at the distal end of the truncated cone-shaped wedge so that when impact occurs, the compressed helical spring is biased against the truncated cone-shaped wedge and an end stop on the bar's distal end which results in the opening of the segments.

A second aspect of the present invention is directed to a bait dispensing device which can be filled with bait, and holds the bait secure when casting, dispersing the bait in a localised area upon contact with the water's surface, comprising:
- a container comprising of three segments adapted to house bait when the three segments are closed together during casting and open upon contact with the water's surface into a 'crown-like' formation,
- a line attachment means to connect the container to a retrieval line,
- a hinge mechanism which is secured to each of the three segment's stabilising fins and allows the segments to open upon contact with the water's surface,
- a connecting frame to which the three segments are connected by the hinge mechanism so that, even in the open configuration, all segments remain connected to the bait dispensing device,
- magnetic closing means for the container, whereby the magnetic force of attraction between the magnets attached to each segment secures the segments together along their interjoining edges,
- a movement limiting means to hold segments open upon contact comprising of a sliding truncated cone-shape wedge on a bar attached to the connecting frame which is acted upon by a compressed helical spring which surrounds the bar and is biased against the wedge and an end stop on the bar which on impact opens the segments.

Advantageously, the bait dispensing device possesses a substantially flat face at its distal end and a pointed proximal tail which leads into stabilising fins, where the means of securing the container to the line are positioned at the proximal end of the bait dispensing device.

Preferably, the shape of the fins would facilitate the aerodynamics of the bait dispensing device and would produce a rotational motion upon descent. For instance, the container would have a 'bomb' shaped container but with a flat distal face.

The bait is contained within the three segments when closed during the casting of the bait dispensing device and the three segments are secured together through the force of the active magnetic field between the magnets connected to each of the segments. Upon contact with the water's surface, the three segments separate from one another due to the shock wave upon impact with the water's surface. This then results in the bait being released into the water from within the container.

In a preferred embodiment, the three segments would be made of a plastic flexible filiform material such as polypropylene which would provide a memory effect that would facilitate the bait dispensing device maintaining its open configuration during its retrieval. The three segments would all be identical in length so as to ensure even distribution of the force exerted on the container upon impact.

In a preferred embodiment, the three segments would have interior or exterior ridged lips encompassing the edges of their interjoining edges which would provide a watertight seal when the bait dispensing device was in its closed configuration.

In one embodiment, the container of the bait dispensing device would comprise of three segments which each span a cross section of 120° of the container.

In another embodiment, the container of the bait dispensing device would comprise of one segment which spans a cross section of 180° of the container and two segments which each span 90° of the container.

The bait dispensing device according to the second aspect of the present invention is equipped with a hinge mechanism which provides the advantage of a defined opening movement and a sturdy structural connection to increase longevity.

### Brief description of the drawings:

Examples of the present invention will now be described hereinbelow with reference to the accompanying drawings, in which:
Figure 1A and Figure 1B show perspective views of a first bait dispensing device according to the invention in an open configuration from a front and rear perspective view respectively;
Figure 2 shows a side view of the first bait dispending device according to the invention in a closed configuration;
Figure 3A shows a side view, Figure 3B shows a top down view, Figure 3C shows a side perspective view, and Figure 3D shows a top down perspective view of one of the three segments of the first bait dispensing device according to the invention;
Figure 4 shows an exploded perspective view of the first bait dispensing device according to the invention;
Figure 5A and Figure 5B show perspective views of a second bait dispensing device according to the invention in an open configuration from a front and rear perspective view respectively;
Figure 6 shows a side view of the second bait dispensing device according to the invention in a closed configuration;
Figure 7A shows a side view, Figure 7B shows a top down view, Figure 7C shows a front perspective view, and Figure 7D shows a rear perspective view of the left 90° segment of the second bait dispensing device according to the invention;
Figure 8A shows a side view, Figure 8B shows a top down view, Figure 8C shows a rear perspective view, and Figure 8D shows a front perspective view of the right 90° segment of the second bait dispensing device according to the invention;
Figure 9A shows a side view, Figure 9B shows a top down view, Figure 9C shows a front perspective view, and Figure 9D shows a rear perspective view of the 180° segment of the second bait dispensing device according to the invention;
Figure 10 shows an exploded perspective view of the second bait dispensing device according to the invention; and
Figure 11 shows a perspective view of a third bait dispensing device according to the invention.

### Detailed Description of Drawings:

The Figures show three embodiments. Similar features are labelled with similar numbers.

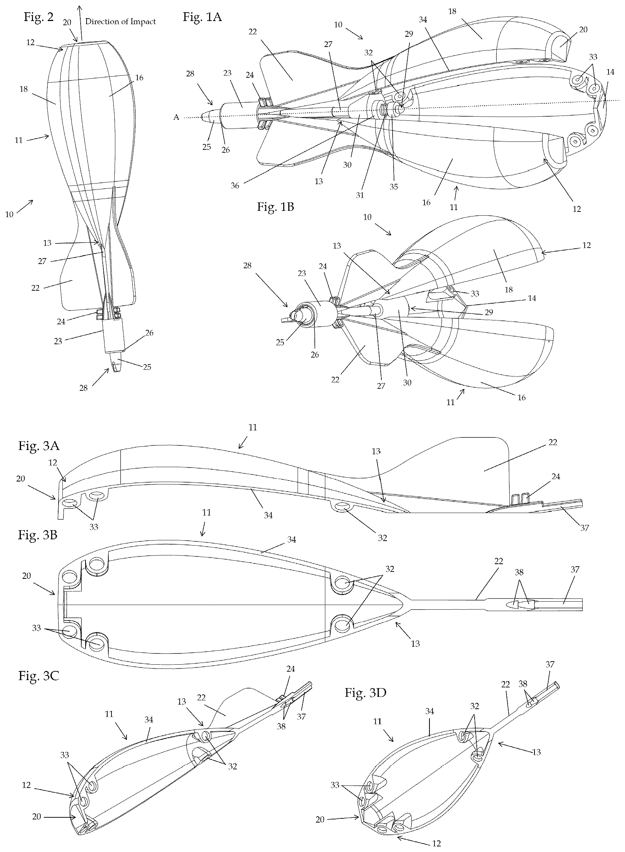

Figure 1A and Figure 1B show a first bait dispensing device 10 from a front perspective view and rear perspective view respectively, comprising of a container 11, to hold bait within it whilst being cast with a line and the container 11 has a distal end 12 and a proximal end 13. The container 11 is comprised of three segments 14, 16, 18. The overall impression the container 11 gives when in its closed configuration is similar to that of a 'bomb-like' shape as shown in Figure 2. However, the container 11 has a flat distal face 20. Each segment 14, 16, 18 widens from the flat distal face 20 for approximately 1 quarter of the length of the segment 14, 16, 18 before the segment 14, 16, 18 then becomes increasingly narrow until it reaches its proximal portion or proximal end 13. Each of the segments 14, 16, 18 is equipped with a stabilising fin 22 at their proximal portion 13 end. Each stabilising fin 22 is placed on the segment 14, 16, 18 such that it is spaced equidistant from the fin on another segment 14, 16, 18 around 360° of the central axis A of the bait dispensing device 10. The three segments 14, 16, 18 are permanently connected by a cylindrical fastening means 23 connecting to narrow flexible proximal tails 37 of the segments 14, 16, 18 at the proximal end of the stabilising fins 22. The segments 14, 16, 18 are joined to the fastening means by way of each segment's 14, 16, 18 respective narrow flexible proximal tail 37 being enclosed within the cylindrical fastening means 23. Between the cylindrical fastening means 23 and each segment's 14, 16, 18 respective stablishing fin 22, are a number of rectangular protrusions 24 which ensure that the segments 14, 16, 18 may not slide further into the cylindrical fastening means 23 and ensures the optimal position for the segments 14, 16, 18 to open on impact with the water. At the centre of the cylindrical fastening means is the three narrow flexible proximal tails 37 of the segments 14, 16, 18 and these segments 14, 16, 18 will in turn surround a central bar 27 which runs through the centre of the device 10. The bar 27 holds a complimentary shape to optimally fit within the segments 14, 16, 18 such that the bar's 27 width becomes narrower and wider to fit, in a complimentary fashion, within the segments 14, 16, 18 and other components such as the cylindrical fastening means 23, truncated cone shaped wedge 30, helical spring 31, and end stop 35. The bar 27 is narrower at its distal end 29 so as to allow for the truncated cone-shaped wedge 30, the circular collar 35, and the helical spring 31 to move along the length of the bar's 27 narrow distal end 29 but at the point along the bar 27 where the segment's 14, 16, 18 proximal ends 13 are located, the bar 27 widens so as to provide a collar which serves to prevent the truncated cone-shaped wedge 30 from sliding further towards the bar's 27 proximal end 28 than necessary when the compressed helical spring 31 is released and pushes the circular collar 36 and in turn the truncated cone-shaped wedge 30 along the bar 27. The point at which the bar widens provides a barrier to the truncated cone-shaped wedge 31 so that when the helical spring 31 is uncompressed the truncated cone-shaped wedge 30 is held in the appropriate position to hold the segments 14, 16, 18 in an open configuration whereby the magnets of their adjacent edges are apart and outside of the range of the magnetic attractive forces. This widening of the bar 27 thus aids the smooth opening of the device 10. On the opposite side of the segments 14, 16, 18 narrow flexible proximal tails 37 to the rectangular protrusions 24 are a number of stepped protrusions 38 which are complimentary to the shape of the bar 27 so that the stepped protrusions 38 fit within the sections where the bar 27 changes in width and thus the stepped protrusions 38 aid in mechanically holding the segment's 14, 16, 18 narrow flexible proximal tails 37 around the bar 27 restricting the narrow flexible proximal tails 37 sliding along the bar 27. This bar's 27 proximal end 28 possesses a line attachment 25 which protrudes from the proximal end of the bait dispensing device 10 and is equipped with a loop for attachment of the throwing/retrieval line. The throwing/retrieval line is not illustrated in the Figures contained herein. The proximal end of the cylindrical fastening means 23 allows for it to be attached to the bar 27 by way of the proximal end of the cylindrical fastening means 23 connecting to the distal end of the line attachment 25 which is fitted to the proximal end 28 of the central bar 27 for attachment to the throwing/retrieval line. The attachment of the cylindrical fastening means 23 and the line attachment 25 may be achieved by the attachment of the attachment collar 26 which connects the proximal end of the cylindrical fastening means 23 to the distal end of the line attachment 25. Whilst connected to the line attachment 25, the cylindrical fastening means 23 tightly secures the narrow flexible proximal tails 37 of the segments 14, 16, 18 in the cylindrical central recess of the cylindrical fastening means 23 on the bar 27. The distal end 29 of the bar 27 extends within the container 11 by approximately a quarter of the length of the container's 11 proximal end 13. Housed along the bar 27 is a truncated cone shaped wedge 30. The wedge 30 has a complimentary concavity to the proximal end 13 of the segments 14, 16, 18 and so is positioned within the proximal end 13 of the container 11 when the three segments 14, 16, 18 are in their closed configuration. Housed around the bar 27 at the distal end of the truncated cone shaped wedge 30 is a circular collar 36 which interposes between the distal end of the truncated cone shaped wedge 30 and the proximal end of a helical spring 31 such that it provides the proximal surface for the compressed helical spring to push against whilst in its compressed position. The compressed helical spring 31 is housed around the bar 27 between the circular collar 36 at the distal end of the truncated cone-shaped wedge 30 and the distal end 29 of the bar 27 where there is an end stop 35 which serves to secure the helical spring 31 between the end stop 35 and the circular collar 36 which in turn pushes against the wedge 30 from its proximal side and this provides a surface from which the spring 31 can generate thrust against the wedge 30. The end stop resembles the circular shape of the collar but has a smaller diameter in this embodiment. Whilst the three segments 14, 16, 18 are permanently joined via the cylindrical fastening means 23 at their narrow flexible proximal tails 37, the segments 14, 16, 18 can be temporarily secured together along their adjacent interjoining edges by magnets 32, 33 which are fixed within each of the segments 14, 16, 18 so that they directly face the corresponding magnet 32, 33 of their adjacent segment 14, 16, 18 which has an opposing pole. These magnets 32, 33 are fixed on each of the segments 14, 16, 18 along the interjoining edges of the segments 14, 16, 18. Each segment 14, 16, 18 possesses eight total magnets 32, 33 with four at the proximal end of the container 13 and four at the distal end of the container 12. Two magnets 32 are located on one interjoining edge of the segment and two magnets 32 are located symmetrically on the other interjoining edge of the segment 14, 16, 18 at the proximal end of the container 13 and is repeated on each segment join. In a similar fashion, at the distal end of the container 12, two magnets 33 are located on one interjoining edge of the segment and two magnets 33 are located symmetrically on the other interjoining edge of the segment 14,16, 18 where the flat distal face 20 is located. This ensures that each opposed side of the segments 14, 16, 18 can attach magnetically with its adjacent segment 14, 16, 18 via the corresponding magnets 32, 33 of that segment 14, 16, 18. Encompassing the exterior surface of the three segments 14, 16, 18, along their interjoining edges, is a ridged interior lip 34.

In Figure 1A and Figure 1B, the first bait dispensing device 10 is in an open bait loading configuration in which all three segments 14, 16, 18 are not connected at their interjoining edges by their corresponding magnets 32, 33. Whilst in this configuration, each segment's 14, 16, 18 interior concave surface provides a recess in which the bait can be placed prior to the closure of the container 11 by connecting the magnets 32, 33 at the interjoining edges of each segment 14, 16, 18. Alternatively, one may connect two of the three segments 14, 16, 18 via the magnets 32, 33 at their interjoining edges whilst the remaining segment 18 is pivoted partially outwards from the centre of the device 10 at the axis of its proximal tail which is enclosed within the cylindrical fastening means 23 such that the connection of two of the three segments comprises 2/3 of the volume of the container 11. However, this loading configuration is not displayed in the Figures. In this embodiment of the bait dispensing device 10 according to the present invention, the three segments 14, 16, 18 each span a cross section of 120° of the container 11.

When the flat distal face 20 of the bait dispensing device 10 makes contact with the water's surface, the resulting shock wave induces ovalisation upon the container 11 whereby each segment 14, 16, 18 experiences deformation upon impact with the water's surface. This ovalisation is facilitated by the segments 14, 16, 18, and subsequently the container 11, being made of a thin deformable plastic. This flexible material allows the segments 14, 16, 18 to flex apart from one another in a fashion resembling a blossoming flower whilst the narrow flexible proximal tails 37 of each segment 14, 16, 18 remain enclosed within the cylindrical fastening means 23. Once the bait dispensing device 10 makes contact with the water's surface, it undergoes deformation and transitions into its open configuration when the three segments 14, 16, 18 completely separate from one another. The separation of the three segments 14, 16, 18 facilitates the decompression of the helical spring 31 housed on the bar 27. Therefore, the helical spring 31 generates thrust when it presses against the end stop 35 from one end and the circular collar 36from its other end which in turn pushes against the wedge 30. The end stop 35 remains securely in place but the circular collar 36 and wedge 30 are free to slide along the bar 27 towards its proximal end 28 as a result of the force released from the previously compressed spring 31 and the fact it is no longer enclosed within the three segments 14, 16, 18 in their closed configuration. The wedge 30 slides along the bar 27 in the direction of the bar's 27 proximal end 28 until it reaches the wider section of the bar 27 in which the thickness of the bar 27 acts as a collar which is too wide to allow the cylindrical interior of the wedge 30 to slide along. Therefore, the wedge 30 is held in this position by the uncompressed helical spring 31. Whilst the wedge 30 is held in this position by the uncompressed helical spring 31 it interposes between the three segments 14, 16, 18 and prevents the segments 14, 16, 18 from getting sufficiently close to one another for the magnetic force of attraction to act on them. This movement limiter function for the three segments 14, 16, 18 ensures that the bait dispensing device 10 remains in its open configuration whilst it is being retrieved from the water.

The container 11 comprises of a light weight, robust plastic material which has a weight below that of water so as to enable the container 11 to float and even glide along the water's surface whilst it is being retrieved. In one embodiment, the segments 14, 16, 18 including their narrow flexible proximal tails 37 could be made of Polypropylene.

The three segments 14, 16, 18 are made of a flexible filiform plastic that provides a memory effect so that the bait dispensing device 10 remains in the open configuration during retrieval from the water. Furthermore, as the bait dispensing device 10 is being pulled in by the line, two of the segments 14, 16 would serve to glide along the water's surface in a fashion comparable to water skis whilst the remaining segment 18 would be above with its aerodynamic shape and aerodynamic stabilising fin 22 serving to reduce the resistance of both the water and air against the bait dispensing device 10.

Figure 2 shows the first bait dispensing device 10 in a closed configuration from a side view. In this configuration, all three segments 14, 16, 18 are secured together at their interjoining edges via their corresponding magnets 32, 33. These three segments 14, 16, 18 comprise the container 11 within which the bait is housed. This is the desired configuration for when the bait dispensing device 10 is cast with a line into a specific area of a body of water. The strength, number and location of the magnets 32, 33 can vary dependent on these factors with respect to the size and weight of the container 11 beyond that shown and described herein. The location of the magnets 32, 33 along the interjoining edges of the segments 14, 16, 18 facilitates complete closure of the container 11 once the bait has been placed inside. Due to the wedge's 30 complimentary cross section to the proximal end 13 of the segments 14, 16, 18, whilst the bait dispensing device 10 is in its closed configuration, the wedge 30 is housed inside the proximal end 13 of the segments 14, 16, 18. Additionally, whilst in the closed configuration, the spring 31 is compressed between the circular collar 36 of the wedge 30 and the end stop 35 at the distal end 29 of the bar 27. Meanwhile, the wedge's 30 proximal end is held in place by the proximal ends 13 of the closed segments 14, 16, 18.

The three segments 14, 16, 18 are all the same length to ensure that equal force is transmitted to the each of the segments 14, 16, 18 by the line when the container 11 is cast so as to prevent an unintentional opening of the container 11.

Figure 3A, Figure 3B, Figure 3C, and Figure 3D show a single segment 14, 16, 18 of the first bait dispensing device 10 in isolation from multiple viewpoints. Here the narrow flexible proximal tail 37 of the segments 14, 16, 18 can be seen which, when connected to the wider device 10, is enclosed within the cylindrical fastening means 23.

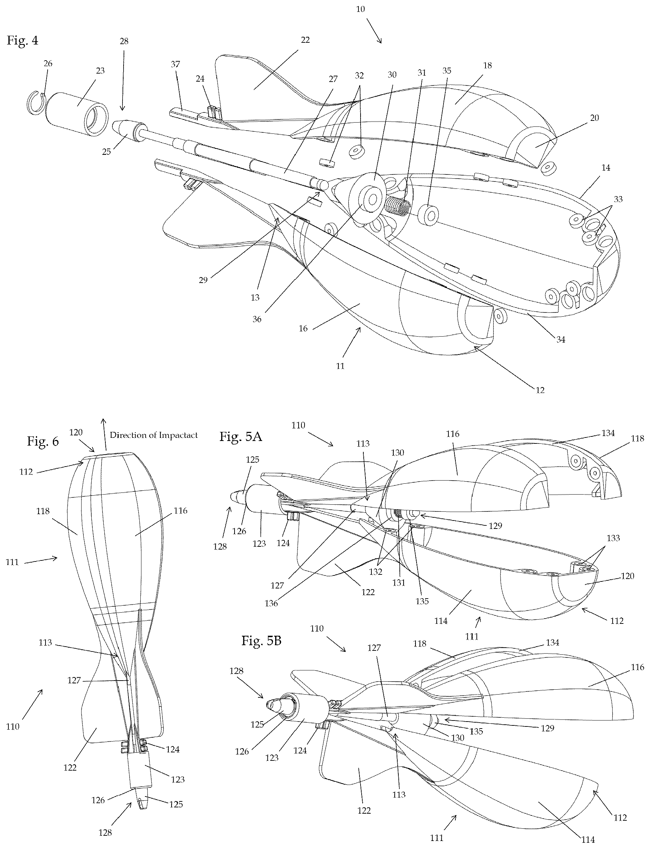

Figure 4 shows an exploded perspective view of the first bait dispensing device 10 such that the individual components can be seen. Here one can see how the narrow flexible proximal tails 37 of the segments 14, 16, 18 are housed within the cylindrical fastening means 23 which is connected at its proximal end to the line attachment 25 at the proximal tail 28 of the central bar 27. The interior of the cylindrical fastening means 23 secures the narrow flexible proximal tails 37 of the segments 14, 16, 18 whilst they themselves enclose the bar 27. The narrow flexible proximal tails 37 are sufficiently flexible to allow the narrow flexible proximal tails 37 of the segments 14, 16, 18 to bend outwards from the central bar 27 of the device 10 on impact with the water whilst the narrow flexible proximal tails 37 are retained in the cylindrical fastening means 23. This flexibility aids the segments 14, 16, 18 in coming apart in a motion resembling that of a blossoming flower.

Figure 5A and Figure 5B show the second bait dispensing device 110 in an open configuration in a front perspective view and rear perspective view respectively. In this embodiment of the bait dispensing device 110 according to the present invention, one segment 114 spans a cross section of 180° of the container 111 and two segments 116, 118 each span 90° of the container 111. This embodiment is equipped with three stabilising fins 122.Each of the three segments is equipped with a single stablishing fin.. The three segments 114, 116, 118 are permanently connected by a cylindrical fastening means 123 connecting at the narrow flexible proximal tail 137 of the segments 114, 116, 118 at the proximal end of the stabilising fins 122 in the same way as the first embodiment of the device 10. In this open configuration, the bait dispensing device 110 occupies a 'crown-like' shape after it has made contact with the water's surface and all three segments 114, 116, 118 have detached from one another at their interjoining edges due to the deformation inflicted upon them by the shock wave. However, the segments 114, 116, 118 remain connected by being housed within the cylindrical fastening means 123 at their narrow flexible proximal tails 37. As in the example of the first bait dispensing device 10, the uncompressed helical spring 131 along the bar 127 serves to force the cone shaped wedge 130 to interpose between the three segments 114, 116, 118 and prevent them from getting close enough together at their interjoining edges for the attractive magnetic force to secure the segments 114, 116, 118 together. This is the configuration that the bait dispensing device 110 would remain in during its retrieval from the water.

Figure 6 shows the second bait dispensing device 110 in a closed configuration from a side view. This is the desirable configuration for when the bait dispensing device 110 is being cast into the water. As in the case of the closed configuration for the first bait dispensing device 10, the truncated cone shaped wedge 130 is housed along the bar 127 within the closed container 111 with the spring 131 being compressed between the end stop 135 and the circular collar 136 which is itself being pushed by the wedge 130 which is held in place by the complimentary shape of the narrow proximal ends 113 of the segments 114, 116, 118. Therefore, the wedge 130 is not interposing between the segments 114, 116, 118 and they are able to remain connected via their corresponding magnets 132, 133.

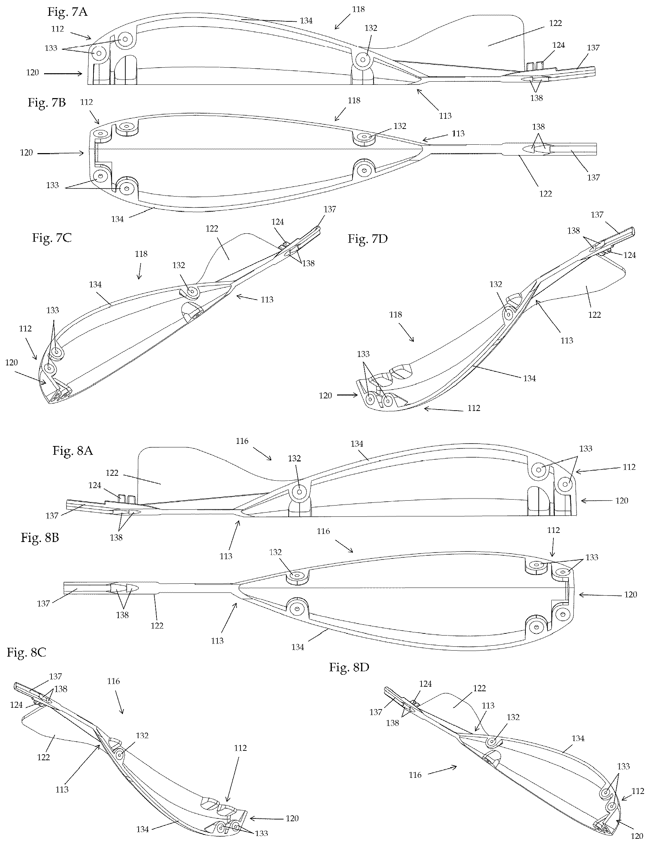

Figure 7A, Figure 7B, Figure 7C, and Figure 7D show the left 90° segment 118 of the second bait dispensing device 110 from multiple viewpoints. In the first bait dispensing device 10, each of the three segments 14, 16, 18 comprise 120° of the container 11. However, in the second bait dispensing device 110, two of the three segments 116, 118 make up 90° of the container 111 whilst the third segment 114 makes up 180° of the container 111. Here the narrow flexible proximal tail 137 of the segment 118 can be seen which, when connected to the wider device 110, is enclosed within the cylindrical fastening means 123.

Figure 8A, Figure 8B, Figure 8C, and Figure 8D show the right 90° segment 116 of the second bait dispensing device 110 from multiple viewpoints. Here the narrow flexible proximal tail 137 of the segment 116 can be seen which, when connected to the wider device 110, is enclosed within the cylindrical fastening means 123.

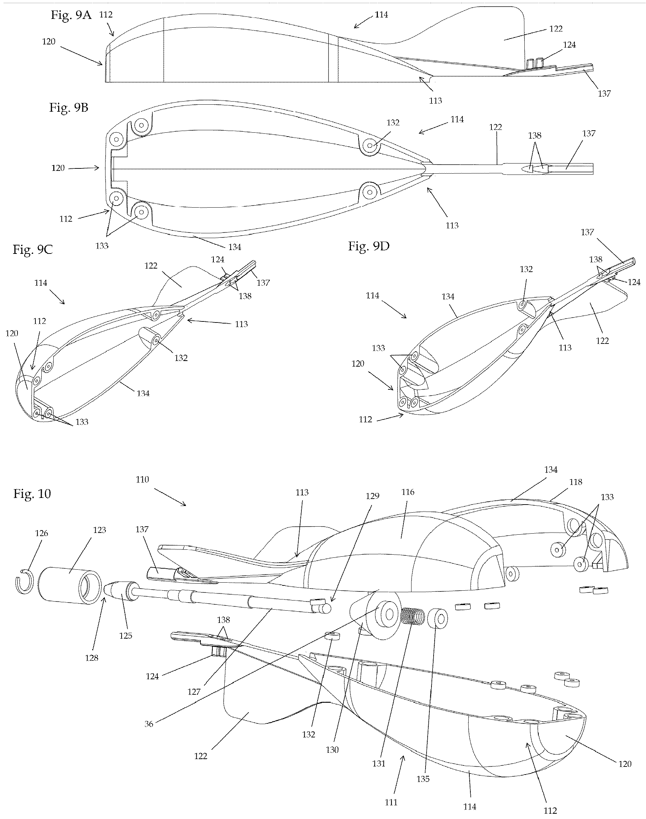

Figure 9A, Figure 9B, Figure 9C, and Figure 9D show the 180° segment 114 of the second bait dispensing device 110 from multiple viewpoints. Here the narrow flexible proximal tail 137 of the segment 114 can be seen which, when connected to the wider device 110, is enclosed within the cylindrical fastening means 123. Furthermore, it should be noted how the concave recess of the 180° segment 114 would make up half the volume of the container 111 and provide a suitable recess for placing bait prior to closure of the device 110.

Figure 10 shows an exploded perspective view of the second bait dispensing device 110 such that the individual components can be seen. Here one can see how the narrow flexible proximal tails 137 of the segments 114, 116, 118 are housed within the cylindrical fastening means 123 which is connected at its proximal end to the line attachment 125 at the proximal tail 128 of the central bar 127. The cylindrical recess within the cylindrical fastening means 123 secures the narrow flexible proximal tails 137 of the segments 114, 116, 118 whilst they themselves enclose the bar 127.

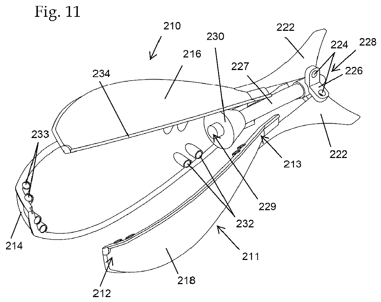

Figure 11 shows the third bait dispensing device 210 in an open configuration. In this embodiment, the three segments 214, 216, 218 are permanently connected by a fastening means connecting at the proximal tail end of the stabilising fins 222. The segments are joined to the fastening means by hinges 224 attached at the proximal tail end of their respective stabilising fins 222. The hinge mechanism 224 connects each segment 214, 216, 218 via their stabilising fins 222 to protruding lips on a connecting frame 226. The connecting frame 226 has three sets of protruding lips, one for each hinge 224 connected in turn to each segment 214, 216, 218. At the tip of each protruding lip is a single journal of the hinge mechanism 224 connected to its respective stabilising fin 222 of its respective segment 214, 216, 218. For instance, for three stabilising fins 222 the connecting frame 226 resembles a 'Y-like' shape when looked at from a rear view from the proximal tail end of the device 210. However, each set of protruding lips of the connecting frame is equidistant from each another. At the centre of the connecting frame 226, where the three protruding lips meet, is a cylindrical hole designed to enclose a bar 227 which runs through the centre of this hole. This bar's 227 proximal end 228 protrudes from the proximal end of the bait dispensing device 210 and is equipped with a loop for attachment of the throwing! retrieval line. Furthermore, this third bait dispensing device 210, shows the segments 14, 16, 18 with a ridged exterior lip 234. The compressed helical spring and end stop are not shown in Figure 11 but are present in this embodiment.

### Use of the Invention:

Firstly, the bait dispensing device 10 must be fastened to a line (not pictured in the Figures).

The angler would then place the first bait dispensing device 10 in its open configuration which can serve as a bait loading configuration (shown in Figure 1A and Figure 1B) by pulling the three segments 14, 16, 18 apart from the other segments 14, 16, 18. The bait could then be loaded into the concave recess of any given segment 14, 16, 18 or alternatively the recess created when any two segments 14, 16, 18 are connected at their interjoining edges and the third segment 14, 16, 18 is left unconnected. The bait could be placed inside the container 11 by hand or the bait dispensing device 10 could be placed into a bucket of bait. The angler would then close all the segments 14, 16, 18 together so that the bait dispensing device 10 was in its closed configuration (shown in Figure 2) by way of the interjoining edges of the segments 14, 16, 18 being connected by the magnetic attractive forces of the complimentary magnets 32, 33 of each interjoining segment. The bait dispensing device 10 can be transitioned from the open configuration to the closed configuration by the user manually pushing the truncated cone-shaped wedge 30 along the bar 27 towards its distal end 29 against the force of the uncompressed helical spring 31 so as to compress the helical spring 31. The user would simultaneously bring the segments 14, 16, 18 together to ensure that the magnets 32, 33 at their interjoining edges would pull together through the magnetic attractive forces.

The bait dispensing device 10 could then be stood upright on its flat distal face 20 so that the angler could then lift the bait dispensing device 10 by the line attached to the proximal end 28 of the bar 27 of the bait dispensing device 10. This prevents the bait dispensing device 10 from being dragged along the ground and reduces the risk of the line becoming tangled in debris or grass on the ground.

The angler would then aim for a specific section of water in which he intends to fish and would then cast the bait dispensing device 10 with the line whilst the magnetic attractive forces ensure that the bait dispensing device 10 maintained its closed configuration and the bait remained secure inside of the container 11 (shown in Figure 2).

When the bait dispensing device 10 is then cast with a line, the friction generated by the air resistance would not be sufficient to induce ovalisation of the container 11 and separate the segments (14, 16, 18]. However, once the container 11 contacted the water, the resultant shockwave effect would be sufficient to overcome the magnetic force of attraction and thus ovalisation of the container 11 would be induced and the three segments 14, 16, 18 would be separated at their interjoining edges, which would then release the bait into the water in a localised area. This configuration of the bait dispensing device 10 is referred to as an open configuration (shown in Figure 1A and Figure 1B). Whilst the bait dispensing device 10 is in a closed configuration (shown in Figure 2) the truncated cone-shaped wedge 30 would be housed within the container and would press against the circular collar 36 which would in turn press against a compressed helical spring 31 which was in turn compressed against an end stop 35 at the distal end 29 of the bar 27. Once the bait dispensing device 10 adopts an open configuration, the wedge would no longer be held by the segments 14, 16, 18 inside the container 11 and the helical spring 31 decompresses and forces the truncated cone-shaped wedge 30 to slide along the bar 27 towards the end of the container 11, due to the release action of the helical spring 31. The truncated cone-shaped wedge 30 would then serve to interpose between the three segments 14, 16, 18 and prevent them from getting close enough to one another for the magnetic attractive force to come into effect. This would prevent the segments 14, 16, 18 closing together during retrieval.

Furthermore, when water entered the container 11 this would serve to add further resistive force in opposition to the magnetic attractive force acting between the segments 14, 16, 18. This would facilitate further separation of the three segments 14, 16, 18 so that they would be maximally apart from one another in a 'crown-like' configuration. This ensures that all the bait within the container 11 would be released upon contact with the water.

Whilst the three segments 14, 16, 18 would then be apart in their open configuration, they would remain individually attached via the cylindrical fastening means housing the narrow flexible proximal tails 37 of the segments 14, 16, 18 at the end of the stabilising fins 22 whilst any number of rectangular protrusions 24 will ensure that the segments 14, 16, 18 may not slide further into the cylindrical fastening means 23 and thus ensure the optimal position for the segments 14, 16, 18 to open on impact with the water (shown in Figure 1A and Figure 1B). The flexible material of the segments 14, 16, 18 would allow each segment 14,16, 18 to bend away from each other in a motion similar to a blossoming flower whilst the narrow flexible proximal tails 37 of the segments 14, 16, 18 remain securely housed within the cylindrical fastening means 23.

Due to its buoyancy, the now empty bait dispensing device 10 would return to the water's surface and maintain its open configuration (shown in Figure 1A and 1B) through the effect of the movement limiting means generated by the truncated wedge 30 interposing between the three segments 14, 16, 18.

The angler would then use the line to reel in the bait dispensing device 10 which would glide along the surface of the water on two of its three segments 14,16, 18 in a fashion comparable to water skis whilst the remaining segment 14, 16, 18 would be positioned above the water with its aerodynamic surface and stabilising fin 22 minimising air resistance.

Numerous variations and modifications to the illustrated constructions may occur to the reader familiar with the art without taking the device 10, 110, 210 outside the scope of the present invention.

## Claims

1. A bait dispensing device (10, 110) which can be filled with bait, and holds the bait secure when casting, dispersing the bait in a localised area upon contact with the water's surface, **characterised in that** it contains:
- a container (11, 111) comprising of three segments (14, 16, 18, 114, 116, 118) adapted to house bait when the three segments (14, 16, 18, 114, 116, 118) are closed together during casting and open upon contact with the water's surface into a 'crown-like' formation,
- a line attachment means (25, 125) to connect the container (11, 111) to a retrieval line,
- a cylindrical fastening means (23, 123) which houses each of the three segment's (14, 16, 18, 114, 116, 118) narrow flexible proximal tails (37,137) at the end of their respective stabilising fins (22, 122) and allows the flexible segments (14, 16, 18, 113, 116, 118) to open upon contact with the water's surface whilst remaining united with the device (10, 110) by way of their narrow flexible proximal tails (37, 137) being secured within the cylindrical fastening means (23, 123),
- magnetic closing means for the container (11, 111), whereby the magnetic force of attraction between the magnets (32, 33, 132, 133) attached to each segment (14, 16, 18, 114, 116, 118) secures the segments (14, 16, 18, 114,116, 118) together along their interjoining edges,
- a movement limiting means to hold segments (14, 16, 18, 114,116, 118) open upon contact comprising of a sliding truncated cone-shaped wedge (30, 130) on a central bar (27, 127) which is housed within the cylindrical fastening means (23, 123) and is surrounded by the three segments (14, 16, 18, 114, 116, 118), the truncated cone-shaped wedge (30, 130)is positioned along the bar (27, 127) within the container (11, 111) portion of the three segments (14, 16, 18, 114, 116, 118) and is acted upon by a compressed helical spring (31, 131) which surrounds the bar (27, 127) at the distal end of the truncated cone-shaped wedge (30, 130) so that when impact occurs, the compressed helical spring (31, 131) is biased against the truncated cone-shaped wedge (30, 130) and an end stop (35, 135) on the bar's (27, 127) distal end (29, 129) which results in the opening of the segments (14, 16, 18, 114, 116, 118).

2. A bait dispensing device (210) which can be filled with bait, and holds the bait secure when casting, dispersing the bait in a localised area upon contact with the water's surface, **characterised in that** it contains:
- a container (211) comprising of three segments (214, 216, 218) adapted to house bait when the three segments (214, 216, 218) are closed together during casting and open upon contact with the water's surface into a 'crown-like' formation,
- a line attachment means (225) to connect the container (211) to a retrieval line,
- a hinge mechanism which is secured to each of the three segment's (214, 216, 218) stabilising fins (222) and allows the segments (214, 216, 218) to open upon contact with the water's surface,
- a connecting frame (226) to which the three segments (214, 216, 218) are connected by the hinge mechanism so that, even in the open configuration, all segments (214, 216, 218) remain connected to the bait dispensing device (210),
- magnetic closing means for the container (211), whereby the magnetic force of attraction between the magnets (232, 233) attached to each segment (214, 216, 218) secures the segments (214, 216, 218) together along their interjoining edges,
- a movement limiting means to hold segments (214, 216, 218) open upon contact comprising of a sliding truncated cone-shape wedge (230) on a central bar (227) attached to the connecting frame (226)which is acted upon by a compressed helical spring (231) which surrounds the bar (227) and is biased against the wedge (230) and an end stop (235) on the bar (227) which on impact opens the segments (214, 216, 218).

3. A bait dispensing device (10, 110, 210) according to Claim 1 or Claim 2 which possesses a substantially flat face (20, 120, 220) at its distal end (12, 112, 212) and a pointed proximal tail (13, 113, 213) which leads into stablishing fins (22, 122, 222), where the means of securing the container (11, 111, 211) to the line are positioned at the proximal end of the bait dispensing device (10 110, 210).

4. A bait dispensing device (10, 110, 210) according to any preceding claim in which the shape of the fins (22, 122, 222) would facilitate the aerodynamics of the bait dispensing device (10, 110, 210) and would produce a rotational motion upon descent.

5. A bait dispensing device (10, 110, 210) according to any preceding claim in which the container (11, 111, 211) has a 'bomb' shaped container (11, 111, 211) with a flat distal face (20, 120, 220).

6. A bait dispensing device (10, 110, 210) according to any preceding claim in which the bait is contained within the three segments (14, 16, 18, 114, 116, 118, 214, 216, 218) when closed during the casting of the bait dispensing device (10, 110, 210) and the three segments (14, 16, 18, 114, 116, 118, 214, 216, 218) are secured together through the force of the active magnetic field between the magnets (32, 33, 132, 133, 232, 233) connected to each of the segments (14, 16, 18, 114, 116, 118, 214, 216, 218). Upon contact with the water's surface, the three segments (14, 16, 18, 114, 116, 118, 214, 216, 218) separate from one another due to the shock wave upon impact with the water's surface. This then results in the bait being released into the water from within the container (11, 111, 211).

7. A bait dispensing device (10, 110, 210) according to any preceding claim in which the three segments (14, 16, 18, 114, 116, 118, 214, 216, 218) are made of a plastic flexible filiform material such as polypropylene which would provide a memory effect that would facilitate the bait dispensing device (10, 110, 210) maintaining its open configuration during its retrieval. The three segments (14, 16, 18, 114, 116, 118, 214, 216, 218) would all be identical in length so as to ensure even distribution of the force exerted on the container (11, 111, 211) upon impact.

8. A bait dispensing device (10, 110) according to preceding claim in which the three segments (14, 16, 18, 114, 116, 118) would have interior ridged lips (34, 134) encompassing the edges of their interjoining edges which would provide a watertight seal when the bait dispensing device (10, 110) was in its closed configuration.

9. A bait dispensing device (210) according to any preceding claim in which the three segments (214, 216, 218) would have external ridged lips (234) encompassing the edges of their interjoining edges which would provide a watertight seal when the bait dispensing device (210) was in its closed configuration.

10. A bait dispensing device (10, 210) according to any preceding claim in which the bait dispensing device (10, 210) would comprise of three segments (14, 16, 18, 214, 216, 218) which each span a cross section of 120° of the container (11, 211).

11. A bait dispensing device (110) according to any preceding claim in which the bait dispensing device (110) would comprise of one segment (114) which spans a cross section of 180° of the container (111) and two segments (116, 118) which each span 90° of the container (111).
